# EUROPÄISCHE PATENTSCHRIFT

(11) **EP 3 429 818 B1**
(45) Veröffentlichungstag und Bekanntmachung des Hinweises auf die Patenterteilung: **18.05.2022**
(21) Anmeldenummer: 17711623.3
(22) Anmeldetag: 15.03.2017
(51) Int. Cl.: B29C 63/00, B27D 5/00, B29C 65/08, B29C 65/10, B29C 65/14, B29C 65/16, B29C 65/48

(54) **VORRICHTUNG ZUM BEARBEITEN UND/ODER BESCHICHTEN EINES WERKSTÜCKS UND VERFAHREN**
DEVICE FOR MACHINING AND/OR COATING A WORKPIECE AND PROCESS
DISPOSITIF POUR USINER ET/OU RECOUVRIR UNE PIÈCE ET PROCÉDÉ

(30) Priorität: 15.03.2016 DE 102016204249
(43) Veröffentlichungstag der Anmeldung: 23.01.2019
(73) Patentinhaber: HOMAG GmbH, 72296 Schopfloch (DE)
(72) Erfinder: KOSTENBADER, Markus, 71149 Bondorf (DE); KNORR, Wolfgang, 72145 Hirrlingen (DE)
(74) Vertreter: Hoffmann Eitle
(86) Internationale Anmeldenummer: PCT/EP2017/056088
(87) Internationale Veröffentlichungsnummer: WO 2017/158001

(56) Entgegenhaltungen:
- WO-A1-02/00449
- WO-A1-02/14033
- DE-A1- 19 741 163
- US-A1- 2009 120 249

## Beschreibung

### Technisches Gebiet

Die Erfindung betrifft eine Vorrichtung zum Bearbeiten und/oder Beschichten eines Werkstücks, das bevorzugt zumindest abschnittsweise auf Holz, Holzwerkstoff oder Kunststoff besteht, mit einem Beschichtungsmaterial, nach dem Oberbegriff von Anspruch 1.

### Stand der Technik

Vorrichtungen zum Bearbeiten und/oder Beschichten eines Werkstücks der eingangs genannten Art werden beispielsweise in der Möbelindustrie verbreitet eingesetzt, insbesondere um plattenförmige Werkstücke im Bereich ihrer Schmalfläche zu profilieren und/oder mit einem meist streifenförmigen Beschichtungsmaterial zu versehen. Eine gattungsgemäße Vorrichtung ist beispielsweise in EP 2 243 619 A1 offenbart.

Die Variantenvielfalt sowohl der zu bearbeitenden bzw. zu beschichtenden Werkstücke als auch des Beschichtungsmaterials hat in den letzten Jahren immer weiter zugenommen und eine fast unüberschaubare Fülle erreicht. So variieren die Werkstücke beispielsweise nicht nur in ihren Abmessungen und ihrer Materialbeschaffenheit, sondern auch die Farbgebung und die Ausbildung von Details wie Konturen werden in immer neuen Varianten auf den Markt gebracht. Gleiches gilt für das Beschichtungsmaterial, das ebenfalls in immer neuen Varianten angeboten wird, wobei hier sowohl optische als auch technische Weiterentwicklungen zu verzeichnen sind.

Beim eigentlichen Beschichtungsvorgang obliegt es dann häufig einer Bedienperson, sowohl für die richtige Kombination von zu beschichtendem Werkstück und Beschichtungsmaterial zu sorgen als auch die Bearbeitungs- und/oder Beschichtungseinrichtung teilweise auf die für diese Kombination geeigneten Betriebsparameter einzustellen. Dies führt dazu, dass sehr hohe Anforderungen an die Qualifikation einer Bedienperson gestellt werden müssen. Soweit die Qualifikation der Bedienperson nicht ausreichend ist, sind hohe Ausschussraten oder sogar Störungen des Betriebs der Vorrichtung zu verzeichnen.

Weitere Vorrichtungen zum Beschichten bzw. Bemustern eines Werkstücks sind in US 2009/120249 A1, WO 02/00449 A1 und WO 02/14033 A1 offenbart. Ferner offenbart DE 19741163 A1 eine Vorrichtung nach dem Oberbegriff des Anspruchs 1.

### Darstellung der Erfindung

Es ist daher Aufgabe der Erfindung, eine Vorrichtung und ein Verfahren zum Bearbeiten und/oder Beschichten eines Werkstücks der eingangs genannten Art bereitzustellen, die bei einfacher Bedienbarkeit eine geringe Ausschussrate sowie einen stabilen Betrieb ermöglichen.

Diese Aufgabe wird erfindungsgemäß durch eine Vorrichtung zum Bearbeiten und/oder Beschichten eines Werkstücks nach Anspruch 1 sowie ein Verfahren zum Beschichten eines Werkstücks nach Anspruch 9 gelöst. Besonders bevorzugte Weiterbildungen der Erfindung sind in den abhängigen Ansprüchen angegeben.

Der Erfindung liegt der Gedanke zugrunde, den Bearbeitungs- und/oder Beschichtungsbetrieb der erfindungsgemäßen Vorrichtung auf eine klare und widerspruchsfreie Informationsbasis zu stellen. Zu diesem Zweck ist erfindungsgemäß vorgesehen, dass die gattungsgemäße Vorrichtung mindestens eine Werkstück-Messeinrichtung aufweist, die eingerichtet ist, mindestens eine Eigenschaft des Werkstücks zu messen, insbesondere eine Eigenschaft der zu bearbeitenden oder zu beschichtenden Oberfläche des Werkstücks.

Die erfindungsgemäße Vorrichtung weist darüber hinaus eine Fügeeinrichtung zum Fügen des Beschichtungsmaterials auf eine Oberfläche des Werkstücks und mindestens eine Beschichtungsmaterial-Messeinrichtung auf, die eingerichtet ist, mindestens eine Eigenschaft des Beschichtungsmaterials zu messen.

Durch die erfindungsgemäße Ausgestaltung der Vorrichtung ist es beispielsweise möglich, die Bedienperson hinsichtlich der Variantenvielfalt der zu bearbeitenden bzw. zu beschichtenden Werkstücke und/oder der ggf. zu verwendenden Beschichtungsmaterialien zu entlasten. Auf diese Weise kann sichergestellt werden, dass fehlerhafte Bearbeitungs- und/oder Beschichtungsvorgänge, die beispielsweise durch ungewünschte Kombinationen von Werkstück/Werkzeug oder Werkstück/Beschichtungsmaterial entstehen, vermieden oder zumindest reduziert werden. Hieraus ergibt sich auch ein deutlich zuverlässiger Betrieb der erfindungsgemäßen Vorrichtung, da die Wahrscheinlichkeit verringert wird, dass durch eine Inkompatibilität beispielsweise zwischen Werkstück/Werkzeug oder Werkstück/Beschichtungsmaterial ein Maschinenstillstand verursacht wird.

Nicht zuletzt ermöglicht die erfindungsgemäße Ausgestaltung der Vorrichtung auch eine deutlich vereinfachte Bedienbarkeit der Vorrichtung durch die Bedienperson. Im Extremfall kann sich die Bedienperson darauf beschränken, lediglich das jeweilige zu beschichtende Werkstück in die Vorrichtung zuzuführen und gegebenenfalls den Betrieb der Vorrichtung zu überwachen.

Gemäß der Erfindung ist ferner vorgesehen, dass die Steuereinrichtung eingerichtet ist, zumindest eine der Fügeeinrichtung, der Fördereinrichtung und der Nachbearbeitungseinrichtung unter Berücksichtigung des Messergebnisses der Werkstück-Messeinrichtung und/oder der Beschichtungsmaterial-Messeinrichtung zu steuern. Auf diese Weise kann die Anzahl der erforderlichen Bedieneingriffe einer Bedienperson minimiert werden, und die erfindungsgemäße Vorrichtung kann sich beispielsweise je nach Messergebnis selbsttätig auf eine bestimmte Betriebsart, einen bestimmten Beschichtungsvorgang etc. einstellen. Hierdurch ergibt sich eine besonders einfache Bedienbarkeit bei geringem Ausschuss und hoher Zuverlässigkeit.

Die Werkstückmesseinrichtung kann zur Messung unterschiedlichster Messgrößen eingerichtet sein. Gemäß einer Weiterbildung der Erfindung ist jedoch vorgesehen, dass die Werkstück-Messeinrichtung eingerichtet ist, eine Werkstückeigenschaft zu erfassen, die ausgewählt ist aus Farbe, Materialbeschaffenheit, Oberflächenbeschaffenheit, Profilierung, Geometrie, insbesondere Dicke und Längen-/Dickenverhältnis, und Ausrichtung des Werkstücks. Diese Messgrößen haben sich als besonders kritisch für einen fehler- und störungsfreien Bearbeitungs- und/oder Beschichtungsvorgang erwiesen, sodass eine genaue Kenntnis dieser Messgrößen erheblich dazu beiträgt, bei einfacher Bedienbarkeit die Ausschussrate zu verringern und die Betriebszuverlässigkeit zu erhöhen.

Aus diesen Gründen ist gemäß einer anderen Weiterbildung der Erfindung vorgesehen, dass mindestens eine Beschichtungsmaterial-Messeinrichtung eingerichtet ist, eine Beschichtungsmaterialeigenschaft zu erfassen, die ausgewählt ist aus Farbe, Materialbeschaffenheit, Oberflächenbeschaffenheit und Geometrie, insbesondere Dicke und/oder Höhe, des Beschichtungsmaterials.

Die Messeinrichtung selbst kann im Rahmen der Erfindung auf unterschiedlichste Art und Weise ausgestaltet sein. Im Hinblick auf die Erzielung zuverlässiger (wenig störungsanfälliger) und ausreichend präziser Messergebnisse ist gemäß einer Weiterbildung der Erfindung jedoch vorgesehen, dass mindestens eine Messeinrichtung ausgewählt ist aus einem mechanischen Messelement, bevorzugt Taster, einem optischen Messelement, einem akustischen Messelement (insbesondere Ultraschall)und einem elektronischen Messelement sowie Kombinationen hiervon.

Wie untenstehend noch näher ausgeführt werden wird, können die jeweiligen Messergebnisse auf unterschiedlichste Art und Weise in den Ablauf des Bearbeitungs- und/oder Beschichtungsvorgangs einfließen. Als besonders kritisch für den Bearbeitungsvorgang hat sich unter anderem die Festlegung der Bearbeitungsart der Bearbeitungseinrichtung (beispielsweise Festlegung des Fräsprofils) erwiesen. Zur Lösung dieses Problems ist gemäß einer Weiterbildung der Erfindung vorgesehen, dass die Steuereinrichtung eingerichtet ist, unter Berücksichtigung mindestens einer Beschichtungsmaterialeigenschaft, insbesondere Geometrie, eine Bearbeitungsart der Bearbeitungseinrichtung festzulegen.

Alternativ oder zusätzlich ist vor diesem Hintergrund gemäß einer Weiterbildung der Erfindung vorgesehen, eine Bearbeitungsart der Bearbeitungseinrichtung unter Berücksichtigung mindestens einer Werkstückeigenschaft, insbesondere Geometrie, festzulegen.

Darüber hinaus ist gemäß einer Weiterbildung der Erfindung vorgesehen, dass die Steuereinrichtung eingerichtet ist, unter Berücksichtigung mindestens einer Werkstückeigenschaft, insbesondere Farbe und/oder Geometrie, ein durch die Fügeeinrichtung zu fügendes Beschichtungsmaterial festzulegen. Hierdurch wird eine besonders zuverlässige Abstimmung der Eigenschaften des Beschichtungsmaterials des zu beschichtenden Werkstücks erreicht, was zur Verminderung der Ausschussrate und zur Erzielung eines störungsfreien Betriebes von entscheidender Bedeutung sein kann.

Ein erfindungsgemäßes Verfahren zum Beschichten eines Werkstücks ist im unabhängigen Patentanspruch 2- 9 definiert und ermöglicht dieselben Vorteile wie die erfindungsgemäße Vorrichtung.

### Kurze Beschreibung der Zeichnungen

Fig. 1 zeigt schematisch eine Perspektivansicht einer Ausführungsform der erfindungsgemäßen Vorrichtung.
Fig. 2 zeigt schematisch eine Perspektivansicht eines mit einem Beschichtungsmaterial beschichteten Werkstücks.

### Ausführliche Beschreibung bevorzugter Ausführungsformen

Bevorzugte Ausführungsformen der Erfindung werden nachfolgend ausführlich unter Bezugnahme auf die Figuren beschrieben.

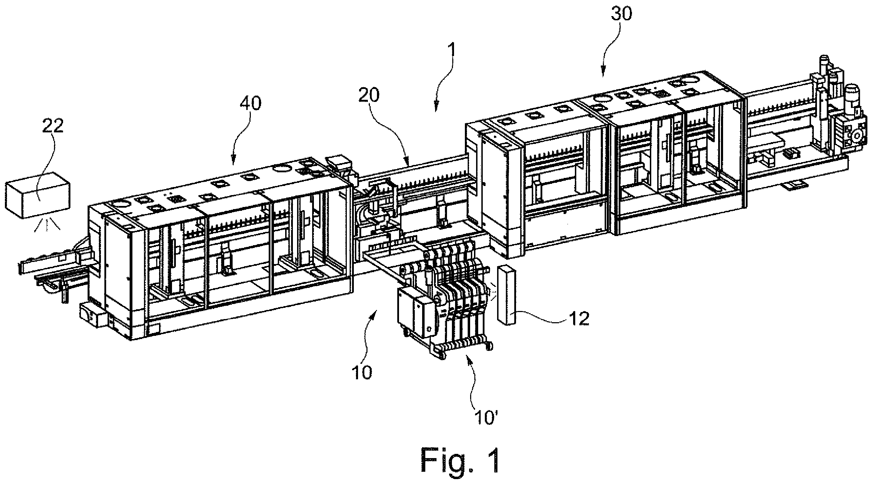

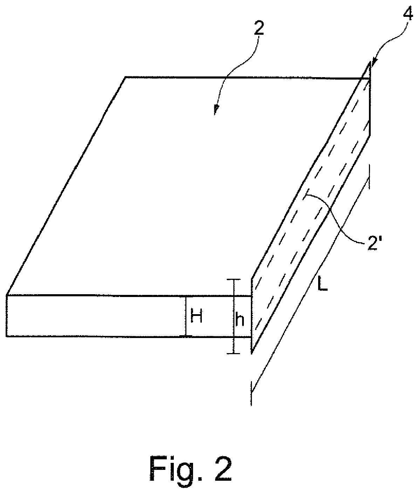

Eine Vorrichtung 1 zum Bearbeiten und Beschichten eines in Fig. 2 schematisch dargestellten Werkstücks 2 ist in Fig. 1 schematisch in einer Perspektivansicht dargestellt.

Bei dem zu beschichtenden Werkstück 2 handelt es sich in der vorliegenden Ausführungsform um ein plattenförmiges Werkstück, das beispielsweise ganz oder teilweise aus Holz, Holzwerkstoff oder Kunststoff besteht, wie sie im Bereich der Möbelindustrie verbreitet zum Einsatz kommen. Im Rahmen der Erfindung können jedoch auch Werkstücke mit anderen Geometrien oder aus anderen Materialien bearbeitet und/oder beschichtet werden.

Das auf eine Oberfläche 2' des Werkstücks aufzubringende Beschichtungsmaterial 4 kann beispielweise bahn- oder streifenförmig ausgebildet sein und dementsprechend beispielsweise auf eine Breit- oder Schmalfläche des Werkstücks aufgebracht werden. Das Beschichtungsmaterial 4 kann dabei ebenfalls aus unterschiedlichsten Materialien einschließlich Kunststoff, Holz, Holzwerkstoff etc. bestehen und beispielsweise auch einen Schichtaufbau besitzen. Dabei kann das Beschichtungsmaterial beispielsweise auch mit einer Funktionsschicht versehen sein, mittels der das Beschichtungsmaterial 4 auf das Werkstück 2 gefügt wird.

Zu diesem Zweck besitzt die in Fig. 1 schematisch dargestellte Vorrichtung 1 in der vorliegenden Ausführungsform zunächst eine Fügeeinrichtung 10, die dazu dient, das in Fig. 1 nicht näher gezeigte Beschichtungsmaterial 4 zu der zu beschichtenden Oberfläche 2' des Werkstücks 2 zuzuführen und auf diese zu fügen. Dabei kann die Fügeeinrichtung 10 im Rahmen der Erfindung auf unterschiedlichsten Fügetechnologien basieren. Beispielsweise können traditionelle Verleimtechnologien zum Einsatz kommen, bei denen in der Fügeeinrichtung ein Haftmittel (wie beispielsweise ein Hotmelt) auf die zu fügende Oberfläche des Beschichtungsmaterials und/oder des Werkstücks aufgetragen wird. Ebenso ist es möglich, wie bereits vorstehend erwähnt, dass das Beschichtungsmaterial 4 mit einer Funktionsschicht versehen ist und die Fügeeinrichtung 10 eine Energiequelle aufweist, mittels der die Funktionsschicht aktiviert oder reaktiviert wird, um auf die zu beschichtende Oberfläche des Werkstücks 2 gefügt zu werden. Als Energiequelle kommen hierbei unterschiedlichste Technologien in Betracht, wie beispielsweise Laser, LED, Infrarot, Heißluft, Mikrowelle, Ultraschall, etc. Im Bereich der Fügeeinrichtung 10 kann das Beschichtungsmaterial 4 bei Bedarf auch an die zu beschichtende Oberfläche 2' des Werkstücks 2 angedrückt und gegebenenfalls auch gekühlt werden.

Die Vorrichtung 1 umfasst darüber hinaus eine Fördereinrichtung 20, die in der vorliegenden Ausführungsform als Durchlauffördereinrichtung ausgebildet ist und dazu dient, das in Fig. 1 nicht näher gezeigte Werkstück 1 in einer Durchlaufrichtung (von links nach rechts) durch die Vorrichtung 1 zu fördern. Die vorliegende Erfindung ist jedoch nicht auf solche Durchlaufmaschinen beschränkt, sondern kann auch bei sogenannten Stationärmaschinen zum Einsatz kommen, bei denen das Werkstück während des Beschichtungsvorgangs ruht und die Fügeeinrichtung 10 oder eine andere Einrichtung bewegt wird. Auch Mischformen beider Konstruktionsprinzipien sind im Rahmen der Erfindung möglich.

### Alternativ oder zusätzlich besitzt die Vorrichtung 1 in der vorliegenden Ausführungsform eine erste

Bearbeitungseinrichtung in Gestalt einer Formatbearbeitungseinrichtung 40, die in der vorliegenden Ausführungsform stromaufwärts der Fügeeinrichtung 10 vorgesehen ist. In der Formatbearbeitungseinrichtung 40 können die Werkstücke 2 zunächst im Bereich ihrer Oberfläche 2' zunächst bearbeitet werden, beispielsweise indem sie mittels einer spanenden Bearbeitung auf ein gewünschtes Format bzw. eine gewünschte Geometrie bearbeitet werden. Auch können die Werkstücke hier im Bereich ihrer Oberfläche 2' profiliert werden, beispielsweise mit einer Nut oder Feder etc. Dementsprechend kann die Formatbearbeitungseinrichtung 40 beispielsweise eines oder mehrere spanende Bearbeitungsaggregate aufweisen. Es können jedoch auch andere Bearbeitungstechnologien zum Einsatz kommen.

Stromabwärts der Fügeeinrichtung 10 weist die Beschichtungseinrichtung 1 in der vorliegenden Ausführungsform ferner eine zweite Bearbeitungseinrichtung in Gestalt einer Nachbearbeitungseinrichtung 30 zum Nachbearbeiten des auf das Werkstück 2 gefügten Beschichtungsmaterials 4 auf. Ein typischer Nachbearbeitungsvorgang kann im Rahmen der vorliegenden Erfindung beispielsweise das sogenannte Bündigfräsen sein, bei dem das mit einem Überstand auf das Werkstück 2 aufgebrachte Beschichtungsmaterial 4 bündig zu einer angrenzenden Oberfläche des Werkstücks 2 gefräst wird. Dabei kann das Beschichtungsmaterial 4 bei Bedarf auch mit einer gewünschten Kontur versehen werden, beispielsweise mit einem Radius oder einer Phase im Bereich des umlaufenden Randes. Dementsprechend kann die Nachbearbeitungseinrichtung 30 eines oder mehrere Bündigfräsaggregate und/oder Formfräsaggregate (in Fig. 1 nicht gezeigt) oder dergleichen aufweisen.

Darüber hinaus weist die Vorrichtung 1 eine Werkstückmesseinrichtung 22 auf, die in der vorliegenden Ausführungsform im Bereich des Werkstückeinlaufs, d.h. zu Beginn der (Durchlauf-)fördereinrichtung 20 angeordnet ist. Die Werkstück-Messeinrichtung 22 ist dazu eingerichtet, eine oder mehrere Eigenschaften des mittels der Fördereinrichtung 20 geförderten Werkstücks 2 zu messen. Zu nennen sind hier insbesondere die Farbe, Materialbeschaffenheit, Oberflächenbeschaffenheit, Profilierung, Geometrie und Ausrichtung des Werkstücks 2. Bei der Geometrie sind insbesondere die in Fig. 2 veranschaulichten Werkstückparameter von Bedeutung, d.h. die Dicke H und die Länge L sowie das sich hieraus ergebende Längen-/Dickenverhältnis. Denn diese Parameter sind von besonderer Bedeutung für den späteren Bearbeitungs- und/oder Beschichtungsvorgang.

Je nach zu messender Werkstückeigenschaft und Anforderungen an die Maschine (geforderter Werkstückdurchsatz, Umgebungsbedingungen, etc) kann die Messeinrichtung 22 durch ein mechanisches Messelement wie beispielsweise einen Taster, aber auch durch optische, akustische (z. B. Ultraschall) und/oder elektronische Messelemente sowie insgesamt Kombinationen hiervon gebildet sein.

Darüber hinaus weist die Vorrichtung 1 in der vorliegenden Ausführungsform eine Beschichtungsmaterial-Messeinrichtung 12 auf, die beispielsweise in der im Bereich der Fügeeinrichtung 10 angeordnet sein kann. Genauer gesagt, ist die Beschichtungsmaterial-Messeinrichtung 12 in der vorliegenden Ausführungsform im Bereich eines Beschichtungsmaterialmagazins 10' angeordnet, in welchem mehrere unterschiedliche Beschichtungsmaterialien 4 bevorratet werden. Dabei kann das Beschichtungsmaterialmagazin 10' je nach Bedarf mit unterschiedlichen Beschichtungsmaterialien 4 bestückt werden.

Die Beschichtungsmaterial-Messeinrichtung 12 ist eingerichtet, beispielweise die Farbe, Materialbeschaffenheit, Oberflächenbeschaffenheit und Geometrie des Beschichtungsmaterials 4 zu erfassen. Dabei soll bezüglich der Geometrie insbesondere die Dicke sowie die in Fig. 2 veranschaulichte Höhe h des Beschichtungsmaterials 4 erfasst werden. Zu diesem Zweck können bei der Beschichtungsmaterial-Messeinrichtung 12 prinzipiell ähnliche Messelemente zum Einsatz kommen wie bei der Werkstück-Messeinrichtung 22, wobei auch hier unterschiedlichste Kombinationen - auch innerhalb einer Vorrichtung - denkbar sind.

Der Betrieb der erfindungsgemäßen Vorrichtung 1 vollzieht sich beispielsweise wie folgt.

Ein Werkstück 2 wird links in Fig. 1 in den Einlaufbereich der Fördereinrichtung 20 eingelegt, beispielsweise von einer Bedienperson und/oder automatisiert. In diesem Bereich werden Eigenschaften des Werkstücks 2 mittels der Werkstück-Messeinrichtung 22 gemessen und an eine in Fig. 1 nicht gezeigte Steuereinrichtung weitergegeben. Darüber hinaus misst die Beschichtungsmaterial-Messeinrichtung 12 die Eigenschaften eines oder mehrere Beschichtungsmaterialien 4 in dem Beschichtungsmaterialmagazin 10' und gibt diese Information ebenfalls an die Steuereinrichtung weiter.

Unter Berücksichtigung dieser Messergebnisse der Werkstückmesseinrichtung 22 und der Beschichtungsmaterial-Messeinrichtung 12 steuert die Steuereinrichtung eine oder mehrere Einrichtungen der Vorrichtung, wie insbesondere die Fügeeinrichtung 10, die Fördereinrichtung 20, die Nachbearbeitungseinrichtung 30 und die Formatbearbeitungseinrichtung 40.

So kann die Steuereinrichtung beispielsweise anhand der Dicke des Beschichtungsmaterials 4 die Bearbeitungsart der Nachbearbeitungseinrichtung 30 derart festlegen, dass ein Profilfräsen mit einem Radius durchgeführt wird, welcher der Dicke des Beschichtungsmaterials 4 entspricht. Alternativ oder zusätzlich kann die Steuereinrichtung die Nachbearbeitungseinrichtung 30 derart steuern, dass für dünne bzw. dicke Beschichtungsmaterialien unterschiedliche Nachbearbeitungswerkzeuge und/oder Fräspfade gewählt werden.

Als weiteres Beispiel kann die Steuereinrichtung beispielsweise anhand der gemessenen Werkstückdicke überhaupt erst ein geeignetes Beschichtungsmaterial auswählen. So kann die Steuereinrichtung beispielsweise ein Beschichtungsmaterial auswählen, dessen Höhe h ausreichend groß ist, um die Schmalfläche eines Werkstücks mit der Dicke H mit ausreichendem Überstand des Beschichtungsmaterials zu beschichten. Dabei kann die Steuereinrichtung gegebenenfalls auch eine Fehlermeldung ausgeben, falls sich in dem Beschichtungsmaterialmagazin 10' kein Beschichtungsmaterial befindet, das für die gemessene Dicke der zu beschichtenden Oberfläche 2' des Werkstücks 2 geeignet wäre.

Alternativ oder zusätzlich kann die Steuereinrichtung beispielsweise auch anhand einer von der Werkstück-Messeinrichtung 22 gemessenen Farbe oder Oberflächenbeschaffenheit ein passendes Beschichtungsmaterial, dessen entsprechende Eigenschaften gegebenenfalls von der Beschichtungsmaterial-Messeinrichtung 12 gemessen wurden, auswählen.

Als weiteres Beispiel kann die Steuereinrichtung anhand der von der Werkstückmesseinrichtung 22 gemessenen Materialbeschaffenheit ein geeignetes Bearbeitungswerkzeug der Formatbearbeitungseinrichtung 40 auswählen. So können beispielsweise für MDF-Werkstücke andere Bearbeitungswerkzeuge sinnvoll sein als für grobporige Spanplatten.

Unterschiedliche Bearbeitungsarten können sich auch anhand der Dicke des Beschichtungsmaterial ergeben. So kann die Steuereinrichtung beispielsweise eingerichtet sein, bei dünnen Beschichtungsmaterialien ein Kappen (Abschneiden) eines Überstandes des Beschichtungsmaterials zu veranlassen, während bei dicken Beschichtungsmaterialien eine Formfräse zum Einsatz kommen kann, um den Überstand des Beschichtungsmaterials zu entfernen bzw. bündig zu fräsen.

Bei dem Werkstück kann es sich auch um ein Werkstück handeln, das bereits an mindestens einer Oberfläche mit einem Beschichtungsmaterial versehen ist. In diesem Falle kann die Werkstück-Messeinrichtung 22 beispielsweise auch die Eigenschaften des Werkstücks einschließlich diese Beschichtungsmaterials messen und auf dieser Grundlage die weiteren Bearbeitungsschritte steuern, beispielsweise die Auswahl eines passenden Beschichtungsmaterials oder die Anpassung der Nachbearbeitungsschritte an die bestehende Geometrie, Kontur, etc. des bereits auf dem Werkstück vorgesehenen Beschichtungsmaterials.

Die erfindungsgemäße Vorrichtung weist mindestens eine Werkstück-Messeinrichtung und/oder mindestens eine Beschichtungsmaterial-Messeinrichtung auf. Die erfindungsgemäße Vorrichtung kann darüber hinaus auch auf anderem Wege mit Informationen über das jeweilige Werkstück bzw. Beschichtungsmaterial versorgt werden, beispielsweise durch Dateneingabe in die Steuereinrichtung, durch Einlesen von auf dem Werkstück bzw. dem Beschichtungsmaterial vorgesehenen Daten oder Informationen, etc.

## Patentansprüche

1. Vorrichtung (1) zum Bearbeiten eines Werkstücks (2), das bevorzugt zumindest abschnittsweise aus Holz, Holzwerkstoff oder Kunststoff besteht, und zum Beschichten des Werkstücks (2) mit einem Beschichtungsmaterial (4), umfassend:
eine Bearbeitungseinrichtung und/oder Nachbearbeitungseinrichtung (30, 40) zum Bearbeiten des Werkstücks (2), und
eine Fördereinrichtung (20) zum Herbeiführen einer Relativbewegung zwischen dem Werkstück (2) und der Bearbeitungseinrichtung und/oder Nachbearbeitungseinrichtung (30, 40),
eine Fügeeinrichtung (10) zum Fügen des Beschichtungsmaterials (4) auf eine Oberfläche (2') des Werkstücks (2), und
eine Steuereinrichtung zum Steuern der Fördereinrichtung (20) und der Bearbeitungseinrichtung und/oder Nachbearbeitungseinrichtung (30, 40), wobei
die Vorrichtung (1) ferner mindestens eine Werkstück-Messeinrichtung (22) aufweist, die eingerichtet ist, mindestens eine Eigenschaft des Werkstücks (2) zu messen, insbesondere eine Eigenschaft einer zu bearbeitenden oder zu beschichtenden Oberfläche (2') des Werkstücks (2),
**dadurch gekennzeichnet, dass**
die Vorrichtung (1) mindestens eine Beschichtungsmaterial-Messeinrichtung (12) aufweist, die eingerichtet ist, mindestens eine Eigenschaft des Beschichtungsmaterials (4) zu messen, wobei die mindestens eine Beschichtungsmaterial-Messeinrichtung (12) eingerichtet ist, die Geometrie, insbesondere Dicke und/oder Höhe, des Beschichtungsmaterials (4) zu erfassen, wobei
die Steuereinrichtung eingerichtet ist, zumindest eine der Fügeeinrichtung (10), der Fördereinrichtung (20) und der Nachbearbeitungseinrichtung (30) unter Berücksichtigung des Messergebnisses der Werkstück-Messeinrichtung (22) und/oder der Beschichtungsmaterial-Messeinrichtung (12) zu steuern.

2. Vorrichtung nach einem der vorhergehenden Ansprüche, **dadurch gekennzeichnet, dass** mindestens eine Werkstück-Messeinrichtung (22) eingerichtet ist, eine Werkstückeigenschaft zu erfassen, die ausgewählt ist aus Farbe, Materialbeschaffenheit, Oberflächenbeschaffenheit, Profilierung, Geometrie, insbesondere Dicke und Längen-/Dickenverhältnis, und Ausrichtung des Werkstücks (2).

3. Vorrichtung nach einem der vorhergehenden Ansprüche, **dadurch gekennzeichnet, dass** mindestens eine Beschichtungsmaterial-Messeinrichtung (12) eingerichtet ist, eine Beschichtungsmaterialeigenschaft zu erfassen, die ausgewählt ist aus Farbe, Materialbeschaffenheit, und Oberflächenbeschaffenheit des Beschichtungsmaterials (4) .

4. Vorrichtung nach einem der vorhergehenden Ansprüche, **dadurch gekennzeichnet, dass** mindestens eine Messeinrichtung (12, 22) ausgewählt ist aus einem mechanischen Messelement, bevorzugt Taster, einem optischen Messelement, einem akustischen Messelement, insbesondere Ultraschall, und einem elektronischen Messelement sowie Kombinationen hiervon.

5. Vorrichtung nach einem der vorhergehenden Ansprüche, **dadurch gekennzeichnet, dass** die Steuereinrichtung eingerichtet ist, unter Berücksichtigung mindestens einer Beschichtungsmaterialeigenschaft, insbesondere Geometrie, eine Bearbeitungsart der Nachbearbeitungseinrichtung festzulegen.

6. Vorrichtung nach einem der vorhergehenden Ansprüche, **dadurch gekennzeichnet, dass** die Steuereinrichtung eingerichtet ist, unter Berücksichtigung mindestens einer Werkstückeigenschaft, insbesondere Farbe und/oder Geometrie, ein durch die Fügeeinrichtung zu fügendes Beschichtungsmaterial (4) festzulegen.

7. Vorrichtung nach einem der vorhergehenden Ansprüche, **dadurch gekennzeichnet, dass** die Steuereinrichtung eingerichtet ist, unter Berücksichtigung mindestens einer Werkstückeigenschaft, insbesondere Geometrie, eine Bearbeitungsart der Nachbearbeitungseinrichtung festzulegen.

8. Vorrichtung nach einem der vorhergehenden Ansprüche, **dadurch gekennzeichnet, dass** die Steuereinrichtung eingerichtet ist, eine Warnmeldung auszugeben, falls eine Werkstückeigenschaft nicht kompatibel zu einer Beschichtungsmaterialeigenschaft ist.

9. Verfahren zum Bearbeiten und/oder Beschichten eines Werkstücks, das bevorzugt zumindest abschnittsweise aus Holz, Holzwerkstoff oder Kunststoff besteht, mit einem Beschichtungsmaterial, unter Einsatz einer Vorrichtung nach einem der vorhergehenden Ansprüche, mit den Schritten:
Herbeiführen einer Relativbewegung zwischen dem Werkstück und der Bearbeitungseinrichtung mittels der Fördereinrichtung,
Messen mindestens Werkstückeigenschaft mittels der Werkstück-Messeinrichtung und/oder mindestens einer Beschichtungsmaterialeigenschaft mittels der Beschichtungsmaterial-Messeinrichtung,
Bearbeiten des Werkstücks mittels der Bearbeitungseinrichtung.

## Claims

1. Device (1) for machining a workpiece (2) which preferably consists at least partially of wood, wood-based material or plastic, and for coating the workpiece (2) with a coating material (4), comprising:
a machining device and/or finishing device (30, 40) for machining the workpiece (2), and
a conveyor device (20) for bringing about a relative movement between the workpiece (2) and the machining device and/or finishing device (30, 40),
a joining unit (10) for joining the coating material (4) to a surface (2') of the workpiece (2), and
a control unit for controlling the conveyor device (20) and the machining device and/or finishing device (30, 40), wherein
the device (1) further has at least one workpiece measuring device (22) which is configured to measure at least one property of the workpiece (2), in particular a property of a surface (2') of the workpiece (2) which is to be machined or coated,
**characterised in that**
the device (1) has at least one coating material measuring device (12) which is configured to measure at least one property of the coating material (4), wherein the at least one coating material measuring device (12) is configured to register the geometry, in particular the thickness and/or height of the coating material (4), wherein
the control unit is configured to control at least one of the joining unit (10), the conveyor device (20) and the finishing device (30) taking into consideration the measuring result of the workpiece measuring device (22) and/or the coating material measuring device (12).

2. Device according to one of the preceding claims, **characterised in that** at least one workpiece measuring device (22) is configured to register a workpiece property selected from colour, material quality, surface quality, profiling, geometry, in particular thickness and length/thickness ratio, and alignment of the workpiece (2).

3. Device according to one of the preceding claims, **characterised in that** at least one coating material measuring device (12) is configured to register a coating material property selected from paint, material quality and surface quality of the coating material (4).

4. Device according to one of the preceding claims, **characterised in that** at least one measuring device (12, 22) is selected from a mechanical measuring element, preferably a probe, an optical measuring element, an acoustic measuring element, in particular ultrasound, and an electronic measuring element and combinations thereof.

5. Device according to one of the preceding claims, **characterised in that** the control unit is configured to specify a processing type of the finishing device taking into consideration at least one coating material property, in particular geometry.

6. Device according to one of the preceding claims, **characterised in that** the control unit is configured to specify a coating material (4) to be joined by the joining unit taking into consideration at least one workpiece property, in particular colour and/or geometry.

7. Device according to one of the preceding claims, **characterised in that** the control unit is configured to specify a processing type of the finishing device taking into consideration at least one workpiece property, in particular geometry.

8. Device according to one of the preceding claims, **characterised in that** the control unit is configured to issue a warning message if a workpiece property is not compatible with a coating material property.

9. Method for machining and/or coating a workpiece which preferably consists at least partially of wood, wood-based material or plastic with a coating material using a device according to one of the preceding claims, with the steps:
bringing about a relative movement between the workpiece and the machining device by means of the conveyor device,
measuring at least one workpiece property by means of the workpiece measuring device and/or at least one coating material property by means of the coating material measuring device,
machining the workpiece by means of the machining device.

## Revendications

1. Dispositif (1) pour l'usinage d'une pièce à usiner (2) qui se compose de préférence au moins par sections de bois, matériau dérivé du bois ou matière plastique, et pour le revêtement de la pièce à usiner (2) avec un matériau de revêtement (4), comprenant :
un dispositif d'usinage et/ou dispositif d'usinage ultérieur (30, 40) pour usiner la pièce à usiner (2), et
un dispositif de transport (20) pour provoquer un mouvement relatif entre la pièce à usiner (2) et le dispositif d'usinage et/ou dispositif d'usinage ultérieur (30, 40),
un dispositif de jonction (10) pour joindre le matériau de revêtement (4) sur une surface (2') de la pièce à usiner (2), et
un dispositif de commande pour commander le dispositif de transport (20) et le dispositif d'usinage et/ou dispositif d'usinage ultérieur (30, 40), dans lequel
le dispositif (1) présente de plus au moins un dispositif de mesure de pièce à usiner (22) qui est conçu afin de mesurer au moins une propriété de la pièce à usiner (2), en particulier une propriété d'une surface (2') à usiner ou à revêtir de la pièce à usiner (2),
**caractérisé en ce que**
le dispositif (1) présente au moins un dispositif de mesure de matériau de revêtement (12) qui est conçu afin de mesurer au moins une propriété du matériau de revêtement (4), dans lequel l'au moins un dispositif de mesure de matériau de revêtement (12) est conçu afin de détecter la géométrie, en particulier l'épaisseur et/ou la hauteur, du matériau de revêtement (4), dans lequel
le dispositif de commande est conçu afin de commander au moins un du dispositif de jonction (10), du dispositif de transport (20) et du dispositif d'usinage ultérieur (30) en tenant compte du résultat de mesure du dispositif de mesure de pièce à usiner (22) et/ou du dispositif de mesure de matériau de revêtement (12).

2. Dispositif selon l'une quelconque des revendications précédentes, **caractérisé en ce qu'**au moins un dispositif de mesure de pièce à usiner (22) est conçu afin de détecter une propriété de pièce à usiner qui est sélectionnée à partir de la couleur, nature de matériau, nature de surface, profilage, géométrie, en particulier épaisseur et rapport longueur/épaisseur et orientation de la pièce à usiner (2).

3. Dispositif selon l'une quelconque des revendications précédentes, **caractérisé en ce qu'**au moins un dispositif de mesure de matériau de revêtement (12) est conçu afin de détecter une propriété de matériau de revêtement qui est sélectionnée à partir de la couleur, nature de matériau et nature de surface du matériau de revêtement (4).

4. Dispositif selon l'une quelconque des revendications précédentes, **caractérisé en ce qu'**au moins un dispositif de mesure (12, 22) est sélectionné à partir d'un élément de mesure mécanique, de préférence un palpeur, un élément de mesure optique, un élément de mesure acoustique, en particulier un ultrason et un élément de mesure électronique ainsi que des combinaisons de ceux-ci.

5. Dispositif selon l'une quelconque des revendications précédentes, **caractérisé en ce que** le dispositif de commande est conçu afin de fixer en tenant compte au moins d'une propriété de matériau de revêtement, en particulier d'une géométrie, un type d'usinage du dispositif d'usinage ultérieur.

6. Dispositif selon l'une quelconque des revendications précédentes, **caractérisé en ce que** le dispositif de commande est conçu afin de fixer en tenant compte au moins d'une propriété de pièce à usiner, en particulier d'une couleur et/ou d'une géométrie, un matériau de revêtement (4) à joindre par le dispositif de jonction.

7. Dispositif selon l'une quelconque des revendications précédentes, **caractérisé en ce que** le dispositif de commande est conçu afin de fixer en tenant compte au moins d'une propriété de pièce à usiner, en particulier d'une géométrie, un type d'usinage du dispositif d'usinage ultérieur.

8. Dispositif selon l'une quelconque des revendications précédentes, **caractérisé en ce que** le dispositif de commande est conçu afin de sortir un message d'avertissement, au cas où une propriété de pièce à usiner n'est pas compatible avec une propriété de matériau de revêtement.

9. Procédé d'usinage et/ou de revêtement d'une pièce à usiner, qui se compose de préférence au moins par sections de bois, matériau dérivé du bois ou matière plastique, avec un matériau de revêtement, en utilisant un dispositif selon l'une quelconque des revendications précédentes, avec les étapes consistant à :
provoquer un mouvement relatif entre la pièce à usiner et le dispositif d'usinage au moyen du dispositif de transport,
mesurer au moins une propriété de pièce à usiner au moyen du dispositif de mesure de pièce à usiner et/ou au moins une propriété de matériau de revêtement au moyen du dispositif de mesure de matériau de revêtement,
usiner la pièce à usiner au moyen du dispositif d'usinage.
